## Europäisches Patentamt

## European Patent Office

## Office européen des brevets

(19)

(11) Veröffentlichungsnummer: **0 283 803 B1**

(12) # EUROPÄISCHE PATENTSCHRIFT

(45) Veröffentlichungstag der Patentschrift: **16.09.92**

(51) Int. Cl.5: **B62D 5/07**

(21) Anmeldenummer: **88103404.5**

(22) Anmeldetag: **04.03.88**

(54) **Hydraulisch betätigte Lenkeinrichtung.**

(30) Priorität: **25.03.87 DE 3709704**

(43) Veröffentlichungstag der Anmeldung:
**28.09.88 Patentblatt 88/39**

(45) Bekanntmachung des Hinweises auf die
Patenterteilung:
**16.09.92 Patentblatt 92/38**

(84) Benannte Vertragsstaaten:
**AT BE DE FR GB IT NL SE**

(56) Entgegenhaltungen:
**EP-A- 0 072 233**
**EP-A- 0 251 290**
**DE-A- 659 437**
**DE-B- 249 094**
**DE-C- 745 937**

(73) Patentinhaber: **STEINBOCK BOSS GMBH**
**Steinbockstrasse 38-40**
**W-8052 Moosburg/Isar(DE)**

(72) Erfinder: **Eilenlehner, Eduard, Dipl.-Ing. (FH)**
**Isarstrasse 1 b**
**W-8052 Moosburg(DE)**
Erfinder: **Schmid, Martin**
**Herrngassse 5**
**W-8308 Niederhornbach(DE)**

(74) Vertreter: **Weickmann, Heinrich, Dipl.-Ing. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

Rank Xerox (UK) Business Services

## Beschreibung

Die Erfindung betrifft eine hydraulisch betätigte Lenkeinrichtung an einem Arbeitsgerät, insbesondere einem Gabelstapler, welches neben der Lenkeinrichtung mindestens einen weiteren hydraulischen Verbraucher sowie ein elektrisches, mit variabler Drehzahl antreibbares Pumpensystem zur Versorgung der hydraulisch betätigten Lenkeinrichtung und des weiteren Verbrauchers aufweist, wobei das Pumpensystem einschaltbar ist, wenn an einem der Lenkeinrichtung zugehörigen Lenkorgan eine Lenkbewegung eingeleitet wird und/oder an einem dem zusätzlichen Verbraucher zugeordneten Steuerorgan eine Arbeitsfunktion eingeleitet wird.

Eine derartige hydraulisch betätigte Lenkrichtung ist bekannt. Dabei wird je eine Hydraulikpumpe für den weiteren hydraulischen Verbraucher, z.B. das Hubsystem, und für die Lenkbewegung eingesetzt. Diese Bauweise erfordert einen großen Platzbedarf und ist aufwendig.

Es ist weiterhin bei brennkraftmaschinengetriebenen Arbeitsgeräten bekannt, eine einzige Hydraulikpumpe zur Versorgung der Lenkeinrichtung und eines zusätzlichen Verbrauchers zu benutzen, wobei ein Mengenteiler ständig einen Teilstrom für die Versorgung der Lenkeinrichtung abzweigt und dieser Teilstrom bei Stillstand der Lenkeinrichtung in den Tank zurück geleitet wird.

Auch aus der DE-PS 27 45 937 ist es bekannt, eine einzige Hydraulikpumpe zum Betrieb der Lenkeinrichtung und des zusätzlichen hydraulischen Verbrauchers zu verwenden. Auch hierbei fördert die Hydraulikpumpe ständig zur Lenkrichtung, so daß ständig Förderleistung abverlangt wird, ständig Geräusch entwickelt wird und das Hydrauliköl ständig erwärmt wird, auch wenn keine Lenkbewegung eingeleitet wird; dabei steht bei Stillstand der Lenkung für den zusätzlichen Verbraucher nicht die volle Fördermenge zur Verfügung.

Es ist daher Aufgabe der vorliegenden Erfindung, eine verlustarme, bauvolumensparende und kostengünstige Anordnung der Lenkeinrichtung an einem Arbeitsgerät zu schaffen.

Diese Aufgabe wird durch die in Anspruch 1 gekennzeichnete Erfindung gelöst, d.h. daß dadurch eine einzige Hydraulikpumpe für die Lenkeinrichtung und den zusätzlichen Verbraucher vorgesehen ist, daß der elektrische Antrieb dieser einzigen Hydraulikpumpe sowohl durch Einwirkung auf das Lenkorgan als auch durch Einwirkung auf das Steuerorgan des zusätzlichen Verbrauchers mit dem jeweils erforderlichen Drehzahlniveau einschaltbar ist, daß am Ausgang der Hydraulikpumpe ein Mengenteiler vorgesehen ist, welcher über eine erste Abzweigung mit fest vorbestimmter Teilmenge an die Lenkeinrichtung anschließbar ist und mit einer die Restmenge führenden zweiten Abzweigung an den zusätzlichen Verbraucher angeschlossen ist, wobei die erste Abzweigung über ein Umschaltventil wahlweise mit der Lenkeinrichtung oder mit dem zusätzlichen Verbraucher verbindbar ist und das Umschaltventil in Abhängigkeit von einer Lenkbewegung des Lenkorgans durch einen Bewegungssensor elektrisch gesteuert ist.

Mit dieser Konstruktion wird in vorteilhafter Weise erreicht, daß für die Lenkeinrichtung und den hydraulischen weiteren Verbraucher nur eine einzige Pumpe vorgesehen ist, diese Pumpe nur dann in Betrieb genommen wird, wenn tatsächlich eine Leistung verlangt wird und eine Leerlaufleistung der Hydraulikpumpe entfällt, wenn weder von der Lenkeinrichtung noch von dem zusätzlichen Verbraucher Leistung verlangt wird. Wenn von der Lenkeinrichtung keine Leistung abverlangt wird, steht die gesamte Förderleistung für den zusätzlicher Verbraucher zur Verfügung.

Mengenteiler der hier in Betracht gezogenen Art zur Gewinnung eines Teilstroms vorbestimmter Fördermenge stehen als handelsübliche hydraulische Bauelemente zur Verfügung, die in sich geschlossen sind und keiner äußeren Ansteuerung bedürfen.

Die Lenkeinrichtung kann mit einem von dem Lenkorgan aus hydraulisch beaufschlagten, doppelt wirkenden Kraftgerät ausgeführt sein, welches über den Mengenteiler und ein durch das Lenkorgan lenkrichtungsabhängig steuerbares Ventilsystem an die Hydaulikpumpe und an einen Vorratstank anschließbar ist. Dies ermöglicht einen Betrieb der Lenkeinrichtung auch direkt durch daS Lenkorgan in einem Notfall, wenn keine Hydraulikflüssigkeit von der Hydraulikpumpe her für die Lenkeinrichtung zur Verfügung steht. Der Bewegungssensor steht auch für die Ein- und Ausschaltung des Pumpenantriebs zur Verfügung. Zur Vereinfachung der elektrischen Schaltung empfiehlt es sich, daß der Antrieb -solange keine Leistungsanforderung durch den zusätzlichen Verbraucher besteht - durch den Bewegungssensor auf eine feste Drehzahl einstellbar ist, welche dem maxiamlen Leistungsbedarf der Lenkeinrichtung entspricht. Die dann allenfalls noch auftretenden Leistungsverluste können in Kauf genommen werden.

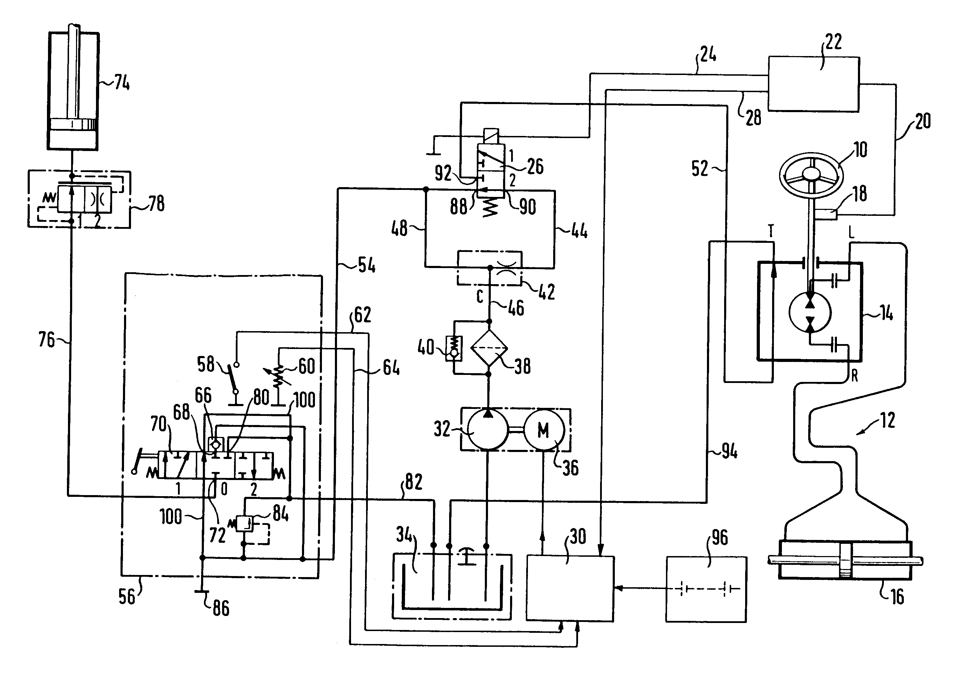

Ein Ausführungsbeispiel der vorliegenden Erfindung ist in der einzigen Figur dargestellt, die ein Blockschaltbild der hydraulisch betätigten Lenkrichtung zusammen mit einem weiteren hydraulischen Verbraucher zeigt.

Wie aus der Figur ersichtlich, umfaßt die hydraulisch betätigte Lenkung ein Lenkorgan 10 mit einer Lenkeinrichtung 12. Die Lenkeinrichtung 12 besteht aus einem Lenkservostat 14, der in üblicher Weise mit einem Lenkzylinder 16 zur Betätigung der Räder (nicht dargestellt) des Gabelstaplers dient.

Am Lenkorgan 10, z.B. in Form eines üblichen Lenkrades, ist ein Bewegungsfühler 18 angeordnet, der die Bewegung des Lenkrades 10 erfaßt und ein Signal erzeugt. Dieses Signal wird elektrisch über eine Leitung 20 einem Lenkmodul 22 zugeleitet. Das Signal wird im Lenkmodul 22 ausgewertet, verstärkt und über eine Leitung 24 einem Umschaltventil 26 und über eine Leitung 28 einer Steuerung 30 zur Drehzahlregelung des Motors 36 einer Hydraulikpumpe 32 zugeführt.

Der Hydraulikkreislauf für die Lenkeinrichtung 12 umfaßt einen drucklosen Vorratsbehälter 34 für Hydraulikflüssigkeit, die von einem Elektromotor 36 antreibbare Hydraulikpumpe 32, einen Ölfilter 38 mit einem Bypassventil 40, das bei einer Überlastung des Ölfilters 38 öffnet, und einen Mengenteiler 42. Diese Elemente sind mittels der Hydraulikleitung 46 in Reihe geschaltet. Der Mengenteiler 42 weist eine erste Abzweigung 44, mit der ein Teilmengenstrom konstanter Menge abgegeben werden kann, und eine zweite Abzweigung 48 auf. Die erste Abzweigung 44 ist mit dem Umschaltventil 26 verbunden. Vom dem Umschaltventil 26 führt eine Hydraulikleitung 52 zu der Lenkeinrichtung 12.

Die zweite Abzweigung 48 des Mengenteilers 42 führt über eine Hydraulikleitung 54 zu einem Steuerorgan 56 für den zusätzlichen hydraulischen Verbraucher 74, der z.B. einen Hydraulikzylinder 74 zum Heben und Senken der Gabel des Gabelstaplers oder zum Kippen des Mastes des Gabelstaplers umfassen kann. Das Steuerorgan 56 umfaßt Geber für Heben bzw. Neigen und hydraulische Zusatzfunktionen. Im dargestellten Ausführungsbeispiel ist schematisch ein Ein-Aus-Schalter 58 und ein Leistungsregler 60, z.B. in Form eines Potentiometers, dargestellt. Die von dem Ein-Aus-Schalter 58 und dem Potentiometer 60 erzeugten Signale werden über Leitungen 62 bzw. 64 ebenfalls der Steuerung 30 zur Drehzahlregelung des Motors 36 der Hydraulikpumpe 32 zugeführt.

Das Steuerorgan 56 umfaßt weiter ein Wegeventil 70 mit drei gesteuerten Anschlüssen und drei Schaltstellungen (3/3 Wegeventil).

Die von der zweiten Abzweigung 48 kommende Hydraulikleitung 54 ist über ein Rückschlagventil 66 mit einem Eingangsanschluß 68 des Wegeventils 70 verbunden. Ein Ausgangs-/Eingangsanschluß 72 des Wegeventils 70 ist mit einer zu dem hydraulischen Verbraucher 74, d.h. dem Hydraulikzylinder, führenden Hydraulikleitung 76 verbunden, in der ein Senk-Bremsventil 78 in Form eines Wegeventils mit zwei steuerbaren Anschlüssen und zwei Schaltstellungen vorgesehen ist.

Das 3/3 Wegeventil 70 ist weiter mit einem Auslaßanschluß 80 mit einer zum Vorratsbehälter 34 zurückführenden Hydraulikleitung 82 verbunden.

Zwischen der Hydraulikleitung 54 (Hydraulikflüssigkeitszuführleitung) und der Hydraulikleitung 82 ( Hydraulikflüssigkeitsabführleitung) ist ein Überdruckventil 84 mit einem auf der Zuflußseite angeschlossenen Druckmeßanschluß 86 angeordnet. Das Überdruckventil 84 öffnet bei Erreichen des Endanschlags der Arbeitszylinder oder bei Überlastung und Störungen, um eine Beschädigung des Hydraulikkreises zu verhindern.

Wenn die Pumpe 32 durch Einwirkung auf das Lenkorgan 10 von dem Bewegungsfühler 18 her in Betrieb genommen wird und neben dem Teilstrom, der durch die Abzweigung 44 und die Leitung 52 zu der Lenkeinrichtung 12 fließt, ein Reststrom durch die Leitung 54 strömt, der in dem Verbraucher 74 zu diesem Zeitpunkt nicht benötigt wird, läuft dieser Reststrom durch einen Neutralumlauf des Wegeventils 70 zum Tank zurück; dieser Neutralumlauf ist mit 100 bezeichnet. Man hält diesen Reststrom so gering wie möglich, dadurch daß die Drehzahl des Pumpenantriebsmotors möglichst genau an den für die Lenkeinrichtung vorgesehenen Teilstrom angepaßt wird.

Das 3/3 Wegeventil 70 kann, wie erwähnt, dei Schaltstellungen einnehmen, nämlich die Schaltstellungen 1, 0 und 2. Das Senk-Bremsventil kann zwei Schaltstellungen einnehmen, nämlich 1 und 2.

In der Schaltstellung 0 des 3/3 Wegeventils 70 ist die Hydraulikleitung 54 mit dem Rückschlagventil 66 verbunden, und die Hydraulikleitung 76 ist gesperrt. Es kann also weder Hydraulikflüssigkeit zum hydraulischen Verbraucher 74 hin- noch von ihm abfließen.

In der Schaltstellung 1 ist die Hydraulikleitung 76 über das Wegeventil 70 mit der Hydraulikleitung 82 verbunden, und das Senk-Bremsventil 78 befindet sich in seiner Schaltstellung 2. In dieser Schaltstellung kann Hydraulikflüssigkeit von dem hydraulischen Verbraucher 74 gedrosselt zurück in den Vorratsbehälter 34 fließen.

In der Schaltstellung 2 ist die Hydraulikleitung 54 über das Wegeventil 70 mit der Hydraulikleitung 76 verbunden, und das Senk-Bremsventil 78 befindet sich in der Schaltstellung 1. In dieser Schaltstellung wird dem hydraulischen Verbraucher 74 Hydraulikflüssigkeit zugeführt.

Das Umschaltventil 26 ist als Wegeventil mit drei steuerbaren Anschlüssen und zwei Schaltstellungen 1, 2 (3/2 Wegeventil) ausgebildet, wobei ein Ausgangsanschluß 88 mit der zweiten Abzweigung 48 des Mengenteilers 42 verbunden ist.

Die erste Abzweigung 44 des Mengenteilers 42 ist mit einem Eingangsanschluß 90 und ein weiterer Ausgangsanschluß 92 ist mit der Hydraulikleitung 52 verbunden.

Befindet sich das Umschaltventil 26 in der Schaltstellung 1, so ist die erste Abzweigung 44 mit der Hydraulikleitung 52 verbunden, und es wird ein Teilmengenstrom der Hydraulikflüssigkeit der Lenkeinrichtung 12 zugeführt.

Befindet sich das Umschaltventil 26 in der Schaltstellung 2, so ist die erste Abzweigung 44 mit der zweiten Abzweigung 48 verbunden, und es wird der Teilmengenstrom der Hydraulikflüssigkeit ebenfalls dem hydraulischen Verbraucher über die Leitung 54 zugeführt.

Die Arbeitsweise der beschriebenen hydraulischen Lenkeinrichtung ist wie folgt.

Bei Bewegen des Lenkorgans 10 wird über den Bewegungsfühler 18 am Lenkorgan 10 ein Signal erzeugt. Das Signal wird im Lenkmodul 22 ausgewertet, verstärkt und damit eine bestimmte Drehzahl der Hydraulikpumpe 32 eingeschaltet und das Umschaltventil 26 für die Lenkeinrichtung 12 in die Schaltstellung 1 gebracht. Ferner ist in dem Lenkmodul 22 ein einstellbares Zeitglied eingebaut, das die Nachlaufzeit der Hydraulikpumpe 32 nach Beendigung der Lenkbewegung steuert. Nach Beendigung der Lenkbewegung und nach Ablauf der eingestellten Nachlaufzeit wird die Hydraulikpumpe 32 selbsttätig abgeschaltet.

Durch den im Hydraulikzweig eingebauten Mengenteiler 42 wird bei eingeschalteter Hydraulikpumpe 32 immer ein Mengenstrom bestimmter Menge und bestimmten Drucks von Hydraulik flüssigkeit für die Lenkung bereitgehalten, die aber nur bei einer Lenkbewegung zum Betätigen des Lenkzylinders 16 durch Umschalten des elektrischen Umschaltventils 26 in die Schaltstellung 1 abgezweigt wird. Ist keine Lenkbewegung notwendig, steht auch diese vorher abgezweigte Menge wieder der Hydraulik für den weiteren Verbraucher zur Verfügung. Durch die Drehzahlregelung des elektrischen Motors 36 der Hydraulikpumpe 32 von der Steuerung 56 her ist es möglich, nach Anwahl bestimmter Drehzahlstufen durch den Schalter 58 oder durch das Potentiometer 60 immer die geforderte Menge, aber nicht mehr an Hydraulikflüssigkeit zur Verfügung zu haben, um eine gewünschte Arbeitsgeschwindigkeit des hydraulischen Verbrauchers 74 zu bewirken. Wenn gleichzeitig gelenkt wird, so verringert sich der Mengenzuflußanteil zu dem Verbraucher 74; die dem Verbraucher 74 zugeführte Absolutmenge und damit die Schaltgeschwindigkeit des Verbrauchers wird aber entsprechend der Einstellung des Potentiometers 60 durch entsprechende Drehzahlerhöhung der Pumpe nachgeregelt, sofern eine entsprechende Drehzahlreserve zur Verfügung steht. Auch ist es möglich, durch den Bewegungssensor 18 bei Leistungsbedarf der Lenkeinrichtung zwangsläufig eine Erhöhung der Pumpendrehzahl auszulösen.

Die mittels des Mengenteilers 42 über die Leitung 52 abgeleitete, auf den maximalen Bedarf des Lenkservostats abgestellte Teilmenge des Gesamtstroms wird dem Lenkservostat 14, d. h. einem Ventilsystem, zugeleitet und in demselben, je nach Lenkrichtung und Lenkausschlag, einem der Zylinderräume des Lenkzylinders 16 zugeführt, wobei die nicht benötigte Menge des Teilstroms bzw. die aus dem anderen Zylinderraum des Lenkzylinders abgeführte Menge der Hydraulikflüssigkeit über eine Rückführleitung 94 wieder dem Vorratsbehälter 34 zugeführt wird.

Die Energieversorgung des beschriebenen hydraulischen Systems erfolgt über die dem Arbeitsgerät eigene Batterie 96.

Mit der Erfindung wird in vorteilhafter Weise erreicht, daß nur dann Energie zur Lenkung entnommen wird, wenn tatsächlich ein Lenkvorgang stattfindet. Findet ein derartiger Lenkvorgang nicht statt, so steht die volle Energie der Hydraulik für den weiteren Verbraucher 74 zur Verfügung, indem der Teilstrom des Mengenteilers 42 über die Leitung 54 der Versorgung des Verbrauchers 74 zugeführt wird. Der Teilstrom in der Abzweigung 44 wird so bemessen, daß er den maximalen Bedarf der Lenkeinrichtung befriedigt. Ist der tatsächliche Bedarf der Lenkeinrichtung 12 niedriger als der zugeführte Teilstrom, so gelangt der Rest des Teilstroms über die Leitung 94 zurück in den Tank. Der Lenkservostat 14 ist so ausgebildet, daß er bei Stillstand der Pumpe 32 eine Lenkbewegung ermöglicht. Hierzu ist in dem Lenkservostat eine durch das Lenkorgan 10 antreibbare Handpumpe vorgesehen, welche bei Stillstand der Pumpe 32 mit dem Lenkzylinder verbunden ist. Das Lenken muß dann zwar mit größerem Kraftaufwand durchgeführt werden, ist aber für den Notfall jederzeit möglich.

Da nur eine hydraulische Pumpe 32 verwendet wird, ist diese Konstruktion platzsparend und kostengünstig. Da bei Stillstand des Lenkorgans 10 keine Hydraulikflüssigkeit zur Lenkeinrichtung 12 gefördert wird, ist der Energieverbrauch minimal. Wenn das Lenkorgan 10 in Ruhe ist und von der Steuerung 56 keine Leistung für den Verbraucher 74 abverlangt wird, steht die Pumpe 32 still, und es tritt keinerlei Energieverbrauch auf. Das Zeitglied in dem Lenkmodul 22 ist so eingestellt, daß der Teilstrom durch die Abzweigung 44 und die Leitung 52 zu der Lenkeinrichtung 12 im Umschaltventil 26 unterbrochen wird, wenn nach Stillsetzung des Lenkorgans 10 der letzte Lenkbefehl des Lenkorgans 10 durch den Lenkzylinder 16 ausgeführt ist.

**Patentansprüche**

1. Hydraulisch betätigte Lenkeinrichtung an einem Arbeitsgerät, insbesondere einem Gabelstapler, welches neben der Lenkeinrichtung mindestens einen weiteren hydraulischen Verbraucher (74) sowie ein elektrisch mit variabler Drehzahl antreibbares Pumpensystem (32) zur Versorgung der hydraulisch betätigten Lenkeinrichtung (12) und des weiteren Verbrauchers (74) aufweist, wobei das Pumpensystem (32) einschaltbar ist, wenn an einem der Lenkeinrichtung (12) zugehörigen Lenkorgan (10) eine Lenkbewegung eingeleitet wird und/oder an einem dem zusätzlichen Verbraucher (74) zugeordneten Steuerorgan (56) eine Arbeitsfunktion eingeleitet wird, dadurch gekennzeichnet, daß eine einzige Hydraulikpumpe (32) für die Lenkeinrichtung (12) und den zusätzlichen Verbraucher (74) vorgesehen ist, daß der elektrische Antrieb (36) dieser einzigen Hydraulikpumpe (32) sowohl durch Einwirkung auf das Lenkorgan (10) als auch durch Einwirkung auf das Steuerorgan (56) des zusätzlichen Verbrauchers (74) mit dem jeweils erforderlichen Drehzahlniveau einschaltbar ist, daß am Ausgang der Hydraulikpumpe (32) ein Mengenteiler (42) vorgesehen ist, welcher über eine erste Abzweigung (44) mit fest vorbestimmter Teilmenge an die Lenkeinrichtung (12) anschließbar ist und mit einer die Restmenge führenden zweiten Abzweigung (48) an den zusätzlichen Verbraucher (74) angeschlossen ist, wobei die erste Abzweigung (44) über ein Umschaltventil (26) wahlweise mit der Lenkeinrichtung (12) oder mit dem zusätzlichen Verbraucher (74) verbindbar ist und das Umschaltventil (26) in Abhängigkeit von einer Lenkbewegung des Lenkorgans (10) durch einen Bewegungssensor (18) elektrisch gesteuert ist.

2. Hydraulisch betätigte Lenkeinrichtung nach Anspruch 1, dadurch gekennzeichnet, daß die Lenkeinrichtung (12) mit einem von dem Lenkorgan (10) aus hydraulisch beaufschlagbaren, doppelt wirkenden Kraftgerät (14, 16) ausgeführt ist, welches über den Mengenteiler (42) und ein durch das Lenkorgan (10) lenkrichtungsabhängig steuerbares Ventilsystem (14) an die Hydraulikpumpe (32) und an einen Vorratstank (34) anschließbar ist.

3. Hydraulisch betätigte Lenkeinrichtung nach Anspruch 1 oder 2, dadurch gekennzeichnet, daß der Antrieb (36) durch den Bewegungssensor aus- und einschaltbar ist.

4. Hydraulisch betätigte Lenkeinrichtung nach einem der Ansprüche 1 bis 3, dadurch gekennzeichnet, daß der Antrieb (36) - solange keine Leistungsanforderung durch den zusätzlichen Verbraucher (74) besteht - durch den Bewegungssensor (18) auf eine feste Drehzahl einstellbar ist, welche dem maximalen Leistungsbedarf der Lenkeinrichtung (12) entspricht.

**Claims**

1. Hydraulically actuated steering device on a working apparatus, particularly a fork lift truck which has, in addition to the steering device, at least one further hydraulic consuming device (74) device as well as a pump system (32) electrically drivable at varying rotational speeds for supplying the hydraulically actuated steering device (12) and the further consuming device (74), the pump system (32) being able to be switched on when a steering movement is initiated on a steering member (10) associated with the steering device (12) and/or when a working function is initiated on a control member (56) associated with the additional consuming device (74), characterized in that a single hydraulic pump (32) is provided for the steering device (12) and the additional consuming device (74), in that the electric drive (36) of this single hydraulic pump (32) can be switched on at the respectively required degree of rotational speed both by acting on the steering member (10) and by acting on the control member (56) of the additional consuming device (74), in that, at the output of the hydraulic pump (32), a flow divider (42) is provided which, by means of a first branch (44) with rigidly predetermined flow amount can be connected with the steering device (12) and, by means of a second branch ducting the remaining amount (48), is connected with the additional consuming device (74), the first branch (44) being connectable via a reversing valve (26) as desired with the steering device (12) or with the additional consuming device (74), and the reversing valve (26) being electrically controlled by a motion sensor (18) depending upon a steering motion of the steering member (10).

2. Hydraulically actuated steering device according to claim 1, characterized in that the steering device (12) is constructed with a double-acting power unit (14, 16) being able to be acted upon hydraulically by the steering member (10) and which, via the flow divider (42) and a valve system controllable dpending on the steering direction by the steering member (10), can be connected with the hydraulic pump (32) and with a storage tank (34).

3. Hydraulically actuated steering device according to claim 1 or 2, characterized in that the drive (36) can be switched off and on by means of the motion sensor.

4. Dudraulically actuated steering device according to one of claims 1 to 3, characterized in that the drive 36 - as long as there exists a performance requirement by the additional consuming device (74) - can he set by means of the motion sensor (18) to a fixed rotational speed which corresponds to the maximum performance requirement of the steering device (12).

**Revendications**

1. Dispositif de direction, actionné hydrauliquement, destiné à un engin de travail, en particulier un chariot élévateur à fourche, qui, outre le dispositif de direction, comporte au moins un autre récepteur (74) hydraulique ainsi qu'un système à pompe (32) à entraînement électrique, à vitesse variable, destiné à alimenter le dispositif de direction (12) actionné hydrauliquement ainsi que l'autre récepteur (74), le système à pompe (32) pouvant être enclenché lorsqu'un mouvement de direction est transmis à un organe de direction (10) faisant partie du dispositif de direction (12) et/ou lorsqu'une fonction de travail est transmise à un organe de commande (56) associé au récepteur (74) supplémentaire, caractérisé en ce qu'une seule pompe hydraulique (32) est prévue pour le dispositif de direction (12) et pour le récepteur (74) supplémentaire, en ce que l'entraînement électrique (36) de cette unique pompe hydraulique (32) peut être enclenché par action sur l'organe de direction (10) ainsi que sur l'organe de commande (56) du récepteur (74) supplémentaire, avec dans chaque cas la vitesse de rotation nécessaire, en ce qu'il est prévu, à la sortie de la pompe hydraulique (32), un diviseur de débit (42) qui, par une première dérivation (44), peut être raccordé au dispositif de direction (12), avec un débit partiel prédéterminé et, par une seconde dérivation (48), guidant la quantité restante, est raccordé au récepteur (74) supplémentaire, la première dérivation (44) pouvant être reliée, par une vanne de commutation (26), au dispositif de direction (12) ou au récepteur (74) supplémentaire au choix et la vanne de commutation (26) étant commandée électriquement en fonction d'un déplacement de direction de l'organe de direction (10), par un capteur de déplacement (18).

2. Dispositif de direction actionné hydrauliquement selon la revendication 1, caractérisé en ce que le dispositif de direction (12) comporte un appareil énergétique (14, 16) à double effet, sollicité hydrauliquement, qui peut être raccordé à la pompe hydraulique (32) et à un réservoir (34), par le diviseur de débit (42) et par un système à vanne (14) commandé, en fonction de la direction, par l'organe de direction (10).

3. Dispositif de direction actionné hydrauliquement selon la revendication 1 ou 2, caractérisé en ce que le moyen d'entraînement (36) peut être déclenché et enclenché par le capteur de déplacement.

4. Dispositif de direction actionné hydrauliquement selon l'une des revendications 1 à 3, caractérisé en ce que le moyen d'entraînement (36) peut être réglé - à condition que le récepteur (74) supplémentaire ne consomme pas de puissance - par le capteur de déplacement (18), sur une vitesse de rotation fixe qui correspond à la puissance maximale consommée par le dispositif de direction (12).

EP 0 283 803 B1